# EUROPEAN PATENT SPECIFICATION

(11) **EP 1 222 343 B1**
(45) Date of publication and mention of the grant of the patent: **04.08.2004**
(21) Application number: 00965634.9
(22) Date of filing: 20.09.2000
(51) Int. Cl.: E04C 3/00, E04B 1/00, E04B 7/00, E04C 3/07, E04C 3/11, E04B 7/02

(54) **A TRUSS TIE-DOWN METHOD AND APPARATUS**
VERFAHREN UND VORRICHTUNG ZUM BEFESTIGEN EINES TRÄGERS
PROCEDE ET APPAREIL D'ARRIMAGE DE FERME

(30) Priority: 24.09.1999 AU PQ307499
(43) Date of publication of application: 17.07.2002
(60) Divisional application: 04075108.3
(73) Proprietor: Weeks Peacock Quality Homes Pty. Ltd., Glandore, S.A. 5073 (AU)
(72) Inventor: WEEKS, Kevin, William, Glandore, S.A. 5037 (AU)
(74) Representative: Lucas, Brian Ronald
(86) International application number: PCT/AU2000/001141
(87) International publication number: WO 2001/023684

(56) References cited:
- GB-A- 2 126 307
- JP-A- 10 018 426
- US-A- 3 474 578
- US-A- 5 079 884

## Description

This invention relates to a truss tie-down method, and to a truss including like-sectioned upper and lower chords which nest one within the other in an inverted relationship at a point at which the first and second chords intersect.

By way of background, US-A-5079884 (Menchetti) explains that one form of sheet metal stud which is known for erecting drywall partitions is a Z-shaped stud in which two opposed flanges of the stud extend in opposite directions from a stud web. The problem addressed by the inventor was to provide a novel extensible sheet metal stud which required only two parts of identical structure which could be easily assembled, did not require close tolerances and permitted easy extension and retraction while being capable of firmly retaining any length at which it was set. The solution put forward was to provide Z-stud in which the two flanges each formed an angle of about 60° with the web and differed in width by considerably more than the thickness of the metal. Each flange had an inwardly angled lip at its outer edge, and the central web of the Z-stud had an elongate central ridge raised in the direction of the wider flange. The height of the raised rib was slightly greater than half the difference in widths of the two flanges. Two similar studs of this structure could be combined into an extensible stud by rotating one stud 180° about its longitudinal axis and placing the narrow flange in each stud into the channel formed by the wider flange and adjacent web and lip of the other Z-stud. The raised ridges of the two Z-studs then abutted one another, holding the flanges in place, while permitting the two studs to be moved longitudinally relative to each other, providing an easily extensible and retractable stud.

US-A-3474578 discloses a truss joist assembly based on generally parallel upper and lower chords each defined by a pair of oppositely facing angular members which were spaced apart and aligned by a continuous serpentine rod which was disposed between them and welded at alternating fixed points. At the ridge end of the assembly there was provided a ridge bracket including an upright plate-like member that fitted into the slots defined between the angular members of the upper and lower chords to which it was fastened by bolts or by welding. At the eave end of the assembly there was provided a base bearing bracket which had a similar plate-like upright member which fitted between the angular members of the upper and lower chords and was bolted or welded thereto. The base bearing bracket had a base portion in the form of a horizontal plate that rested on an inverted channel-shaped bearing bracket which in turn rested on a vertical wall which as illustrated was of masonry. The base portion had apertures for passage of fixing bolts.

JP-A-10018426 (Yoshimi) discloses an earthquake-resistant reinforcing device for use in a wooden framework structure for a building, The document teaches an arrangement in which a metal tongue extended between slots in a post and beams or girders. Additionally a nail plate was applied externally to hold the structure together.

A truss in which the upper and lower chords nest and locate one within the other in an inverted relationship at the eave line of the truss is known from the present applicant's International Patent Application PCT/AU98/00316 published 5^{th} November 1998 as WO 98/49409 (see also US-A-6282862). In particular, that document explains that a conventional metal roof truss was commonly constructed with box-section chords and C-section web members. The box-section chords were formed by two C-sections individually roll formed and then further fabricated by dimple formation for locating and/or fastening by welding, riveting, hole punched and bolted or screwed to close the two C-sections. The fabrication of the section was explained to be a specialised operation and added additional cost and time to the manufacture of a chord. WO 98/49409 went on to explain that open sections were generally quicker and cheaper to manufacture than box-sections comprising two C-sections, but that they lacked the strength and stiffness required for chords. Thus, whenever open sections, such as channel and Z-sections were used in the fabrication of building frames and roof trusses, additional precautions such as providing oversized sections or additional structural support had to be taken to compensate for their inherent strength deficiencies. This of course increased the cost of many structures formed therefrom.

The solution put forward in WO 98/49409 (reference numerals which follow referring to Fig. 1 of this application) was based on the use of an elongated open structural member (10l) that had a cross-section including a minor flange (14l), a major flange (16l) and a web interconnecting said flanges and having a section axis at right angles to the longitudinal axis of the structural member and passing through the flanges and wherein:
said web included a linear portion (12l) which extended substantially coincident with the section axis but substantially less than the length of the section axis between the flanges, and a divergent portion (22l) which extended to one side of said section axis;
said minor flange (14l) extended to said one side of said section axis;
said major flange (16l) extended from said divergent portion to the opposite side of said section axis, and
the section configuration was such that an inverted and reversed corresponding open structural member (10u) was nestable within said open structural member with their respective linear portions (12l, 12u) overlapping each other and with each minor flange (14l, 14u) located in an abutting relationship against the underside of the adjacent major flange (16l, 16u). Preferably the major flange (16l) extended at an acute angle from the divergent portion (22l).

When the open structural member was used as a chord with the major flange (16l) outermost, the linear portion (12l) being substantially less than the length of the section axis between the flanges provided an advantage that the divergent portion (22l) acted in part like a spring to withstand compression forces substantially acting in the direction of the section axis and thereby resisted deformation of the major flange. The minor flange (14l) was preferably shorter than the major flange (16l) and most preferably was shorter than that part of the major flange which extended from where the section axis intersected with the major flange (16l) to the free end of the major flange. Preferably the intersection with the section axis occurred about midway across the major flange. The major and/or the minor flanges preferably both terminated in a return flange (18l, 20l). The return flange preferably returned substantially parallel to the section axis. Preferably the return flange (18l) of the major flange(16l) was spaced further from the section axis than the free end of the minor flange (14l) so that a reversed and inverted corresponding open structural member could nest within the structural member. The open structural member (10l) was preferably asymmetrical in shape and allowed the nesting of an inverted and reversed corresponding open structural member (10u) with the minor flange of one open structural member locatable within the major flange of the other open structural member (14l, 16u; 16l, 14u) and overlapping of the linear portions. An assembled truss with the open structural member forming the top and bottom chord members with C-section truss members preferably had the chord members proud of the truss members thereby allowing stacking of the assembled truss and transportation of the stacks without risk of damage to the truss members by the overlying chord members. In contrast conventional box section chords have C-section truss members joined at their flat surfaces thereby causing the truss members to be proud of the chord members and exposing the truss members to damage during stacking and their transportation.

It is therefore known from WO 98/49409 to provide a pair of like-sectioned, generally Z-shaped chords each having a vertical web, a horizontal minor flange which terminates in a vertical return, and an oppositely directed horizontal major flange which terminates in a vertical return. Also from WO 98/49049 it is known to invert one of the two like-sectioned chords so that the chords may nest one within the other at the eave line with the respective webs abutting (and easily fixable together by a bolt or the like) and with each of the minor flanges and returns nested within the major flange and return of the other chord. The present invention provides a tie-down methodology and apparatus particularly but not exclusively suited for use with the truss system disclosed in WO 98/49409.

According to one aspect the invention resides in a trust tie-down method for use with a truss in which like-sectioned upper and lower chords nest one within the other in an inverted relationship at the eave line of the truss, and in which each of the chords includes a vertical web, a minor flange extending from one end of the web in a first horizontal direction, and a major flange extending from the other end of the web in a horizontal direction opposite to the first direction and terminating in a vertical return, wherein one chord is inverted relative to the other chord such that the respective vertical webs are closely adjacent and such that each minor flange nests within the major flange and return of the other chord, the method including
forming a slot in the major flange of the lower chord; and
locating a connecting element between the closely adjacent webs of the chords, the connecting element extending downwardly through the slot formed in the major flange of the lower chord and being adapted to be connected to a wall frame or the like.

According to another aspect the invention resides in a truss including like-sectioned first and second chords which nest one within the other in an inverted relationship at the point at which the first and second chords intersect, and in which each of the chords includes a web parallel to the plane of the truss, a minor flange extending from one end of the web in a first direction orthogonal to the plane of the truss, and a major flange extending from the other end of the web in a direction opposite to the first direction and terminating in a return parallel to the plane of the truss, wherein one chord is inverted relative to the other chord such that the respective webs are closely adjacent and such that each minor flange nests within the major flange and return of the other chord,
a slot being formed in the major flange of the second chord; and
a connecting element located between the closely adjacent webs of the first and second chords and including a portion extending through the slot, said portion being adapted for connection to a wall frame or the like.

Reference will now be made to the accompanying Figures which illustrate preferred embodiments of the invention and in which:-
FIG 1 is a vertically exploded view of a pair of like-sectioned Z-shaped chords adapted to nest one within the other in an inverted relationship at the eaveline of a truss;
FIG 2 is horizontally exploded view of the upper and lower chord with a connecting element sandwiched therebetween via a bolt and nut arrangement;
FIG 3 is an assembled view of FIG 2;
FIG 4 is a sectioned view of FIG 3;
FIG 5 is a perspective view of an alternative connecting element for the embodiment illustrated in FIGS 2 to 4;
FIG 6 is a perspective view of another alternative connecting element for the embodiment illustrated in FIGS 2 to 4;
FIG 7 is a horizontally exploded view of a second embodiment of the invention in which the connecting element is adapted for connection to the upper chord at two points and to the lower chord at two points;
FIG 8 is an assembled and sectioned view of FIG 7;
FIG 9 is a perspective view of an alternative connecting element for the embodiment illustrated in FIGS 7 and 8; and
FIG 10 is a perspective view of another connecting element for the embodiment illustrated in FIGS 7 and 8.

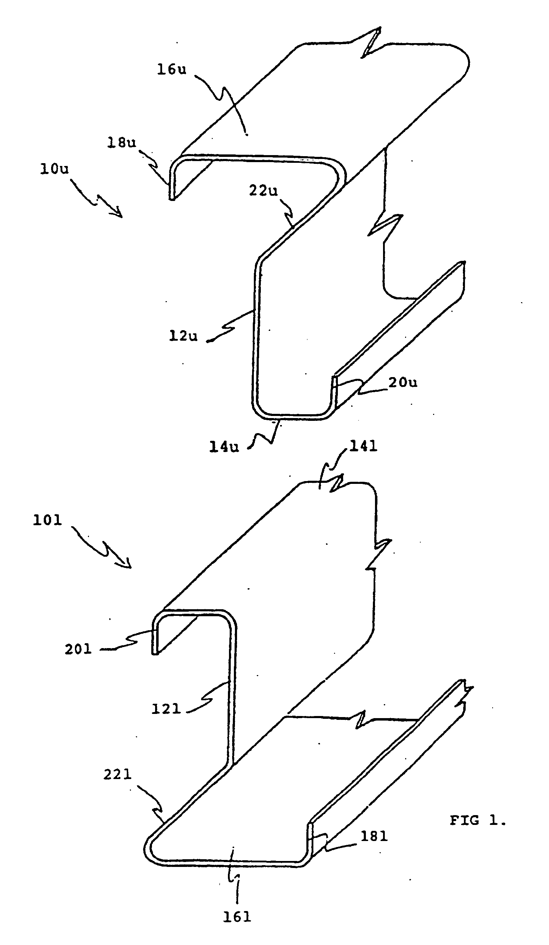

With reference firstly to FIG 1 there is shown a pair of like-sectioned substantially Z-shaped chords which are adapted to nest one within the other in an inverted relationship at the eave line of a truss. The lower chord is usually horizontal and the upper chord is inclined at a pitch prescribed by the architect or builder. When nested together, the upper and lower chords are easily interconnected via a fixing element such as a bolt which passes through the webs of the respective chords.

Referring to FIG 1, the reference numerals include either a "u" or "l",designating "upper" and "lower" respectively. Each chord 10 comprises a web 12, minor flange 14 which terminates in a return 20, and major flange 16 which terminates in a return 18. The vertical web12 is connected to the horizontal major flange 16 via an inclined or divergent web portion 22.

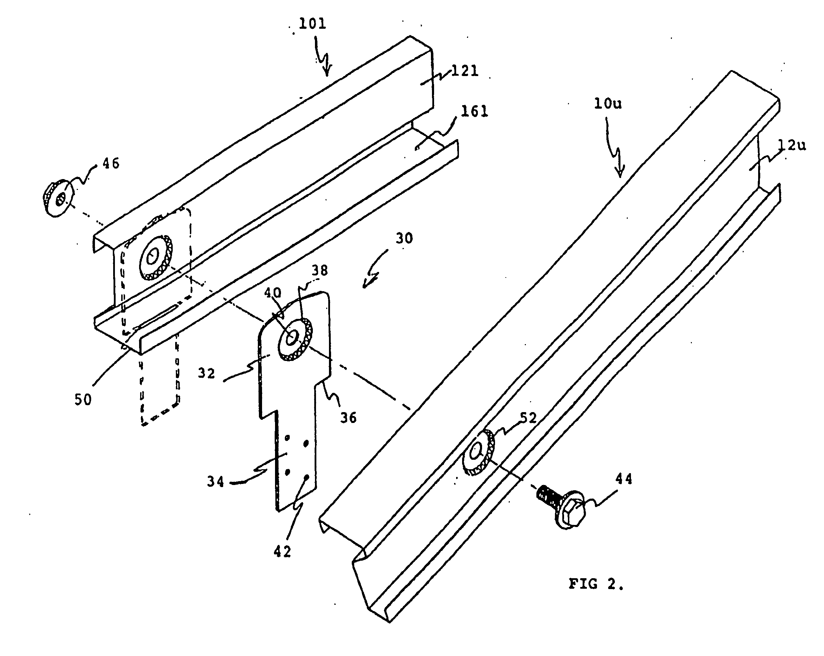

Referring now to FIG 2, a connecting element 30 is in use sandwiched between the web 12u of upper chord 10u and the web 121 of lower chord 101. The connecting element 30 includes an upper head portion 32 in which is defined a pressed region 38 through which an aperture 40 is formed. Connecting element 30 also includes a downwardly extending tongue portion 34 which includes apertures 42 which in use receive screws for fixing the connecting element 30 to a wall frame or the like (not illustrated in FIG 2). The connecting element 30 also includes a pair of shoulders 36 which effectively define the boundary between upper head portion 32 and lower tongue portion 34 of the connecting element 30. As shown in ghosted line in FIG 2, the connecting element 30 is in use located such that the tongue portion 34 extends downwardly through a slot 50 formed in the major flange 16l of the lower chord 10l. As shown, the shoulders 36 of the connecting element 30 seat on the major flange 16l of the lower chord 10l adjacent the ends of the slot 50.

As shown, the web 12u of the upper chord and the web 12l of the lower chord are both pressed and punched so as to be complementary in shape to assist in locating of the chords and connecting element relative to each other and also to improve shear strength between the chords and connecting element. As shown, bolt 44 seats in a pressed region 52 formed in the web 12u of the upper chord. The bolt 44 extends in use through the web 12u of the upper chord, then through the head portion 32 of the connecting element 30 and then through the web 12l of the lower chord. Nut 46 is provided to co-operate with bolt 44. As will be readily apparent, a protruding or bossed region is defined on the opposite side of web 12u from pressed region 52. This bossed region is received in pressed region 38 of the connecting element. Similarly, the bossed region formed on the opposite side of the connecting element 30 is received in the pressed region formed in lower web 12l.

A significant benefit of the present invention is the fact that the connecting element 30 is located centrally of the upper and lower chords. Accordingly, tongue portion 34 of the connecting element 30 extends downwardly from a position which is central of the truss thereby transferring loads directly without any twisting or bending loads. This provides significant structural benefits.

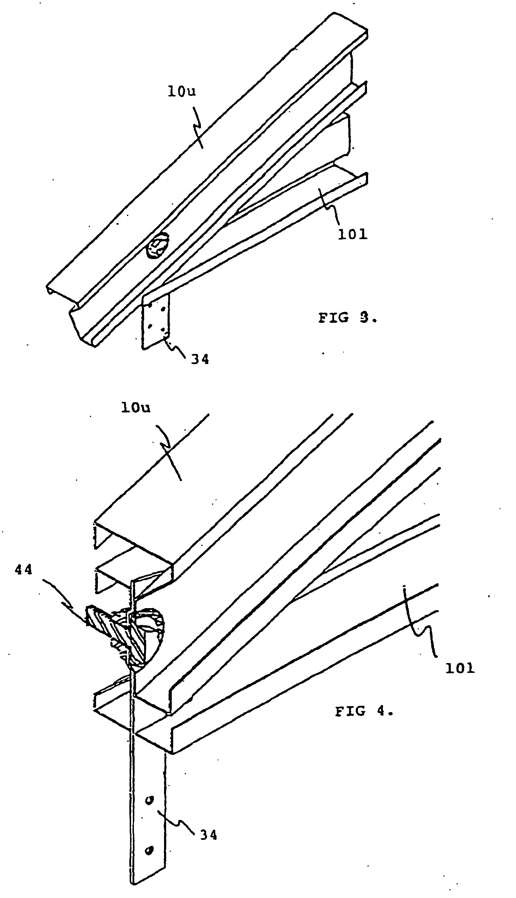

Referring now to FIGS 3 and 4, there is shown the assembled truss with connecting element including the tongue portion 34 of the connecting element extending downwardly from the truss.

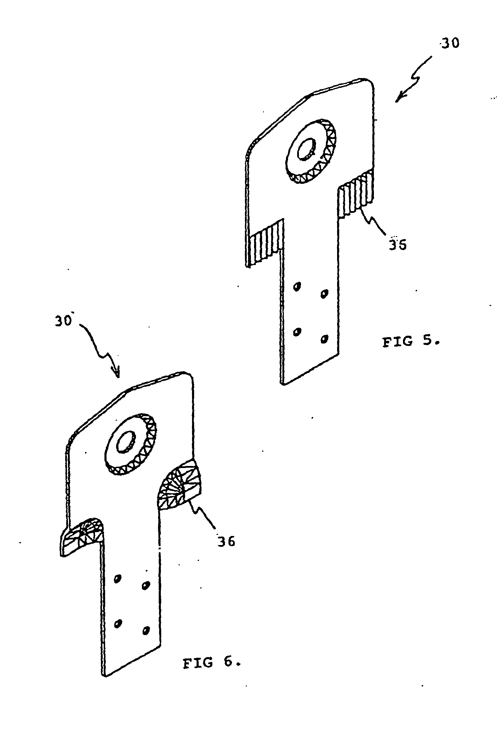

Referring now to FIGS 5 and 6 there are illustrated alternative embodiments of connecting element 30. In FIG 5, the shoulder regions 36 have been corrugated to improve strength and to provide a greater bearing or contact surface between the shoulders of the connecting element and the major flange 16l of the lower chord. Similarly, in FIG 6, the shoulders have been pressed in oppositely directed scalloped shapes.

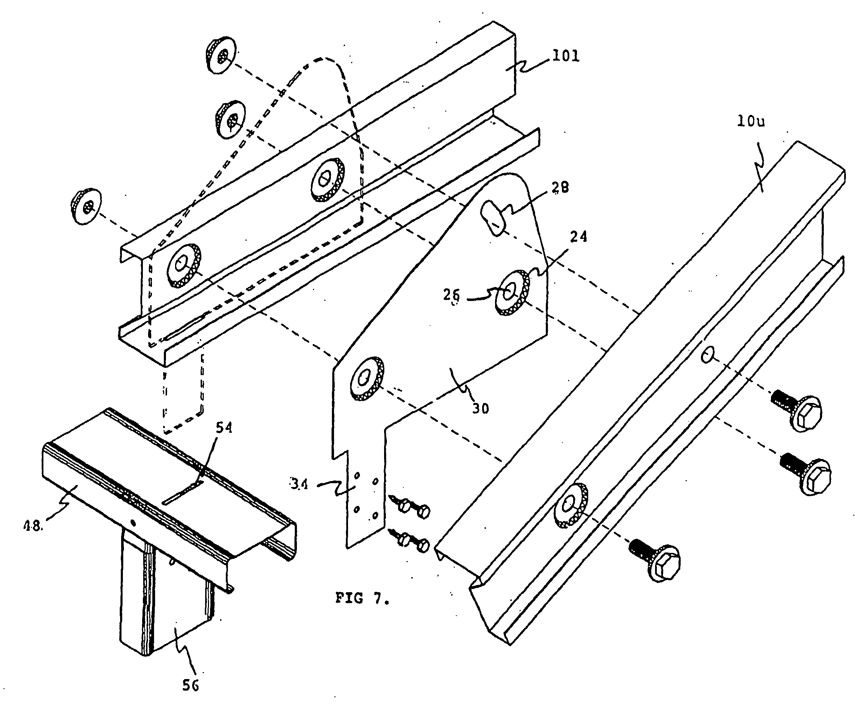

Referring to FIG 7, there is illustrated a second embodiment of the invention in which the connecting element 30 is bolted to the lower chord at two locations, and to the upper chord at two locations. For this purpose, the connecting element 30 includes an additional pair of apertures 26 and 28. Aperture 26 is formed in a pressed region 24 which aligns with a similar pressed region and aperture formed in the lower chord. In contrast, aperture 28 is slot-shaped and is adapted to cooperate with an aperture formed in the upper chord which is not surrounded by a pressed region. As will be readily appreciated, the slotted nature of aperture 28 allows the pitch of the upper chord, and hence roof, to be varied within a limited range.

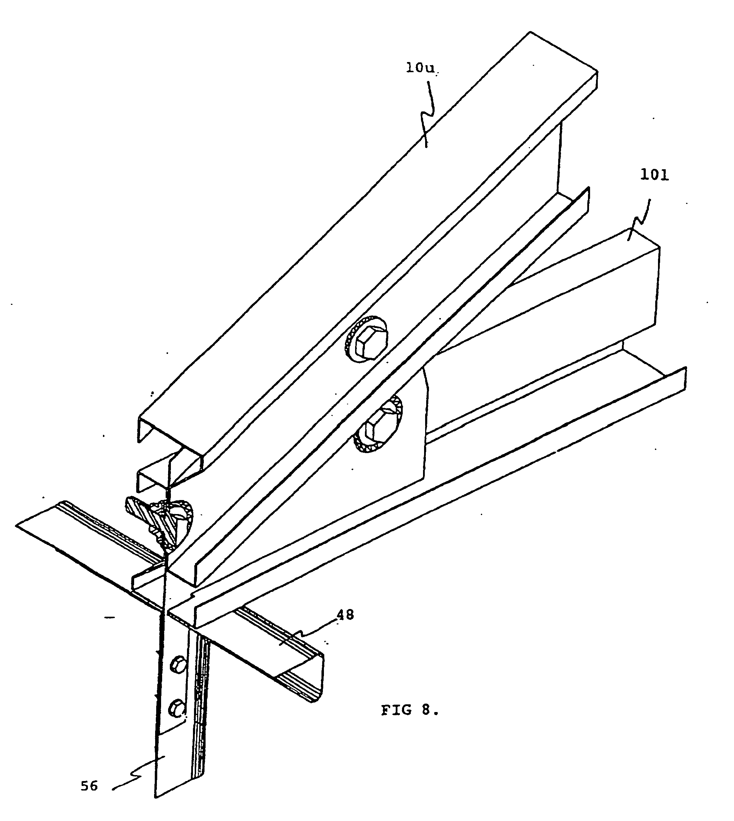

Referring to FIGS 7 and 8, it will be noted that the wall frame has been illustrated in the form of a vertical stud 56 and a horizontal top plate 48. Top plate48 is suitably slotted at 54 to receive the downwardly extending tongue portion 34 of connecting element 30 so that the tongue portion 34 can be readily fixed to the stud via the illustrated screws. Again, it is emphasised that the central location of the connecting element relative to the truss allows loads to be directly applied to the stud without twisting or rotation.

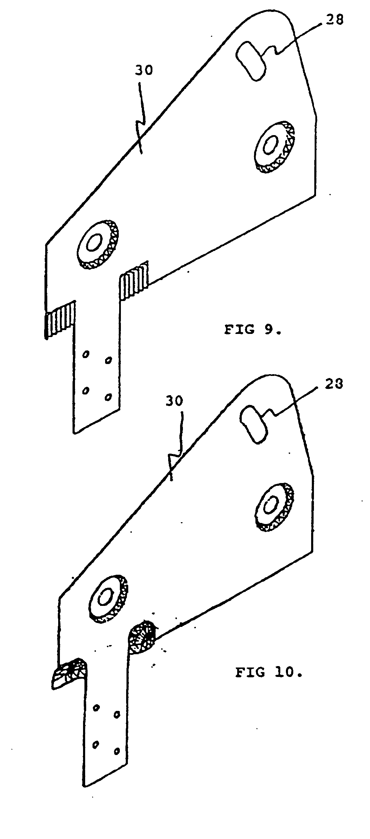

Finally, referring to FIGS 9 and 10, there are illustrated alternative connecting elements akin to FIGS 5 and 6. Specifically, FIG 9 illustrates an arrangement in which the shoulders of the connecting element are corrugated and FIG 10 illustrates an embodiment in which the shoulders are scalloped in opposite directions.

## Claims

1. A truss tie-down method for use with a truss in which like-sectioned upper and lower chords (10u, 10l) nest one within the other in an inverted relationship at the eave line of the truss, and in which each of the chords includes a vertical web (12u, 12l), a minor flange (14u, 14l) extending from one end of the web in a first horizontal direction, and a major flange (16u, 16l) extending from the other end of the web in a horizontal direction opposite to the first direction and terminating in a vertical return (18u, 18l), wherein one chord (10u) is inverted relative to the other chord (10l) such that the respective vertical webs (12u,12l) are closely adjacent and such that each minor flange (14u, 14l) nests within the major flange (16l,16u) and return (18l,18u) of the other chord, and **characterized in that** the method includes:
forming a slot (50) in the major flange (16l) of the lower chord (10l); and
locating a connecting element (30) between the closely adjacent webs (12u,12l) of the chords (10u,10l), the connecting element (30) extending downwardly through the slot (50) formed in the major flange (16l) of the lower chord (10l) and being adapted to be connected to a wall frame or the like.

2. A truss including like-sectioned first and second chords (10u, 10l) which nest one within the other in an inverted relationship at the point at which the first and second chords (10u,10l) intersect, and in which each of the chords (10u,10l) includes a web (12u, 12l) parallel to the plane of the truss, a minor flange (14u, 14l) extending from one end of the web in a first direction orthogonal to the plane of the truss, and a major flange (16u, 16l) extending from the other end of the web in a direction opposite to the first direction and terminating in a return (18u, 18l) parallel to the plane of the truss, wherein one chord (10u) is inverted relative to the other chord (10l) such that the respective webs (12u,12l) are closely adjacent and such that each minor flange (14u, 14l) nests within the major flange (16l,16u) and return (18l,18u) of the other chord, **characterised by**:
a slot (50) being formed in the major flange (16l) of the second chord (10l); and
a connecting element (30) located between the closely adjacent webs (12u, 12l) of the first and second chords (10u,10l) and including a portion (34) extending through the slot (50), said portion (34) being adapted for connection to a wall frame or the like.

3. The truss of claim 2, wherein the connecting element (30) includes shoulders (36) adapted to seat on the major flange (16l) of the second chord (10l) adjacent the ends of the slot (50).

4. The truss of claim 2 or 3, wherein the connecting element (30) is positively located by a fixing element (44) which extends through the webs (12u,12l) and connecting element (30).

5. The truss of claim 4, wherein the fixing element (44) extends through complementary bosses (38, 52) formed in the webs (12u,12l) and connecting element (30).

## Patentansprüche

1. Fachwerk-Verankerungsverfahren für die Verwendung mit einem Fachwerk, bei dem ein Obergurt und ein Untergurt (10u, 10l) mit gleichem Querschnitt in einer umgekehrten Beziehung an der Trauflinie des Fachwerks ineinandergefügt sind und bei dem jeder der Gurte einen vertikalen Steg (12u, 12l), einen kleinen Flansch (14u, 14l), der sich von einem Ende des Stegs in einer ersten horizontalen Richtung erstreckt, und einen großen Flansch (16u, 16l), der sich von dem anderen Ende des Stegs in einer zu der ersten Richtung entgegengesetzten horizontalen Richtung erstreckt und in einer vertikalen Umbiegung (18u, 18l) endet, umfasst, wobei ein Gurt (10u) in Bezug auf den anderen Gurt (10l) in der Weise umgekehrt ist, dass die jeweiligen vertikalen Stege (12u, 12l) nahe beieinander liegen und dass jeder kleine Flansch (14u, 14l) in den großen Flansch (16l, 16u) und in die Umbiegung (18l, 18u) des anderen Gurtes eingeschoben ist, **dadurch gekennzeichnet, dass** das Verfahren umfasst:
Bilden eines Schlitzes (50) in dem großen Flansch (16l) des Untergurtes (10l); und
Anordnen eines Verbindungselements (30) zwischen den nebeneinanderliegenden Stegen (12u, 12l) der Gurte (10u, 10l), wobei sich das Verbindungselement (30) durch den Schlitz (50), der in dem großen Flansch (16l) des Untergurtes (10l) ausgebildet ist, nach unten erstreckt und so beschaffen ist, dass es mit einem Wandrahmen oder dergleichen verbunden werden kann.

2. Fachwerk, das einen ersten und einen zweiten Gurt (10u, 10l) mit gleichem Querschnitt aufweist, die in einer umgekehrten Beziehung an einem Punkt, an dem sich der erste und der zweite Gurt (10u, 10l) schneiden, ineinandergeschoben sind, und bei dem jeder der Gurte (10u, 10l) einen Steg (12u, 12l), der zu der Ebene des Fachwerks parallel ist, einen kleinen Flansch (14u, 14l), der sich von einem Ende des Stegs in einer ersten Richtung, die zu der Ebene des Fachwerks senkrecht ist, erstreckt, und einen großen Flansch (16u, 16l), der sich von dem anderen Ende des Stegs in einer zu der ersten Richtung entgegengesetzten Richtung erstreckt und in einer Umbiegung (18u, 18l), die zu der Ebene des Fachwerks parallel ist, endet, umfasst, wobei ein Gurt (10u) in Bezug auf den anderen Gurt (10l) umgekehrt ist, so dass die entsprechenden Stege (12u, 12l) nahe nebeneinander liegen und jeder kleine Flansch (14u, 14l) in den großen Flansch (16l, 16u) und in die Umbiegung (18l, 18u) des anderen Gurtes eingeschoben ist, **gekennzeichnet durch**
einen Schlitz (50), der in dem großen Flansch (16l) des zweiten Gurtes (10l) ausgebildet ist; und
ein Verbindungselement (30), das sich zwischen den nahe nebeneinanderliegenden Stegen (12u, 12l) des ersten und des zweiten Gurtes (10u, 10l) befindet und einen Abschnitt (34) aufweist, der sich **durch** den Schlitz (50) erstreckt und mit einem Wandrahmen oder dergleichen verbunden werden kann.

3. Fachwerk nach Anspruch 2, bei dem das Verbindungselement (30) Schultern (36) aufweist, die auf dem großen Flansch (16l) des zweiten Gurtes (10l) in der Nähe der Enden des Schlitzes (50) sitzen können.

4. Fachwerk nach Anspruch 2 oder 3, bei dem das Verbindungselement (30) durch ein Befestigungselement (44), das sich durch die Stege (12u, 12l) und durch das Verbindungselement (30) erstreckt, endgültig angeordnet ist.

5. Fachwerk nach Anspruch 4, bei dem sich das Befestigungselement (44) durch komplementäre Vorsprünge (38, 52), die in den Stegen (12u, 12l) und in dem Verbindungselement (30) ausgebildet sind, erstreckt.

## Revendications

1. Procédé de fixation d'armature à utiliser avec une armature dans laquelle des semelles supérieure et inférieure de type profilé (10u, 10l), emboîtées l'une dans l'autre dans une relation d'inversion au niveau de la ligne d'avancée de l'armature , et dans lequel chacune des semelles comprend une bande verticale (12u, 12l), un petit rebord (14u, 14l) s'étendant à partir d'une extrémité de la bande dans une première direction horizontale, et un grand rebord (16u, 16l) s'étendant à partir de l'autre extrémité de la bande dans une direction horizontale opposée à la première direction et s'achevant en un retour vertical (18u, 18l), dans lequel une semelle (10u) est inversée par rapport à l'autre semelle (10l) de telle sorte que les bandes verticales respectives (12u, 12l) sont très étroitement adjacentes et de telle sorte chaque petit rebord (14u, 14l) s'emboîte à l'intérieur du grand rebord (16l, 16u) et du retour (18l, 18u) de l'autre semelle, et **caractérisé en ce que** le procédé comporte de :
former une fente (50) dans le grand rebord (16l) de la semelle inférieure (10l) et
placer un élément de raccordement (30) entre les bandes étroitement adjacentes (12u, 12l) des semelles (10u, 10l), l'élément de raccordement (30) s'étendant vers le bas à travers la fente (50) formée dans le grand rebord (16l) de la semelle inférieure (10l) adapté pour être raccordé à une structure de paroi ou analogue.

2. Armature comportant des première et deuxième semelles de type profilé (10u, 10l) qui s'emboîtent l'une dans l'autre suivant une relation inversée au niveau du point dans lequel les première et seconde semelles (10u, 10l) s'entrecoupent, et dans lequel chacune des semelles (10u, 10l) comprend une bande (12u, 12l) parallèle au plan de la armature, un petit rebord (14u, 14l) s'étendant à partir d'une extrémité de la bande dans une première direction perpendiculaire au plan de l'armature, et un grand rebord (16u, 16l) s'étendant à partir de l'autre extrémité de la bande dans une direction opposée à la première direction et s'achevant en un retour (18u, 18l) parallèle au plan de l'armature, dans laquelle une semelle (10u) est inversée par rapport à l'autre semelle (10l) de telle sorte que les bandes respectives (12u, 12l) se trouvent très étroitement adjacentes et de telle sorte que chaque petit rebord (14u, 14l) repose à l'intérieur du grand rebord (16u, 16l) et du renvoi (18l, 18u) de l'autre semelle, **caractérisée par** :
une fente (50) formée dans le grand rebord (16l) de la seconde semelle (10l) et
un élément de raccordement (30) placé entre les bandes très étroitement adjacentes (12u, 12l) des première et seconde semelles (10u, 10l) et comportant une partie (34) s'étendant à travers la fente (50), ladite partie (34) étant adaptée pour être raccordée à une structure de paroi ou analogue.

3. Armature selon la revendication 2, dans laquelle l'élément de raccordement (30) comporte des épaulements (36) adaptés pour s'appuyer sur le grand rebord (16l) de la seconde armature (10l) adjacent aux extrémités de la fente (50).

4. Armature selon la revendication 2 ou 3, dans laquelle l'élément de raccordement (30) est placé de façon efficace par un élément de fixation (44) qui s'étend à travers les bandes (12u, 12l) et l'élément de raccordement (30).

5. Armature selon la revendication 4, dans lequel l'élément de fixation (44) s'étend à travers des bossages complémentaires (38, 52) formés dans les bandes (12u, 12l) et l'élément de raccordement (30).
